# EUROPEAN PATENT APPLICATION

(11) **EP 0 601 769 A1**
(43) Date of publication of application: **15.06.1994**
(21) Application number: 93309561.4
(22) Date of filing: 30.11.1993
(51) Int. Cl.: B60T 11/20, B60T 11/232

(54) **Hydraulic master cylinder**

(30) Priority: 10.12.1992 GB 9225768
(71) Applicant: LUCAS INDUSTRIES PUBLIC LIMITED COMPANY, Solihull, West Midlands B91 3TX (GB)
(72) Inventor: Axtell, Richard James, Birmingham, B13 0EL (GB)
(74) Representative: Waite, Anthony William

(57) **Abstract**

An hydraulic master cylinder has a cylinder body (1) containing a valve having a valve element (6) cooperating with a valve seat (5) carried by a piston (2) slidable in the body. The valve element and valve seat are relatively movable between two positions to permit opening and closing of the valve, and stop means (14) is arranged to hold the valve element in a fully open position relative to the valve seat for a retracted position of the piston. The stop means is adjustable to set the fully open position of the valve element dependent upon the tolerances present between components of the master cylinder.

## Description

This invention relates to an hydraulic master cylinder, primarily for use in a vehicle hydraulic braking system, and including a cylinder body containing a valve of which a closure element cooperates with a valve seat carried by a piston slidable in the body, the valve element and valve seat being relatively movable between two positions to permit opening and closing of the valve.

In order to permit fluid recuperation of a pressure chamber of the cylinder when the piston is retracted, the closure element of the valve in one conventional type of master cylinder is held in its open position when the piston is retracted by a stem extending through the piston and engaged with a fixed stop. The retracted position of the piston depends upon a number of tolerances present between components in the master cylinder assembly and its normally associated servo booster and since the tolerances are different in each assembly, it is necessary to set the position of the fixed stop for each assembly very accurately on a production line in order to ensure correct closure and full opening of the valve at the appropriate times in the operating cycle of the master cylinder.

In one prior proposal aimed at dealing with this problem, the fixed stop is in the form of a pin extending transversely across the cylinder bore and a plurality of different diameter pins is provided to permit the selection, during assembly, of a suitably sized pin to provide, as nearly as possible, the correct valve operation depending upon the tolerances encountered in the assembled master cylinder. Not only is the selection of an appropriate pin by trial and error an undesirable procedure on a production line, but in many cases, the selected pin will provide a less than ideal valve setting because it will not be properly matched to the particular combination of tolerances encountered.

An object of the present invention is to provide an hydraulic master cylinder incorporating improved means for setting a desired valve operating clearance of a valve thereof.

According to the present invention, there is provided an hydraulic master cylinder comprising a cylinder body containing a valve having a valve element cooperating with a valve seat carried by a piston slidable in the body, the valve element and valve seat being relatively movable between two positions to permit opening and closing of the valve, and stop means arranged to hold the valve element in a fully open position relative to the valve seat for a retracted position of the piston, the stop means being adjustable to set the fully open position of the valve element dependent upon the tolerances present between components of the master cylinder.

Preferably, the stop means extends transversely through the cylinder body and is operable to vary the position of the valve element progressively relative to the seat, conveniently by performing a camming action relative to the valve element.

In one convenient arrangement, the stop means is rotatable about its longitudinal axis and has an eccentric portion arranged to perform the camming action upon rotation of the stop means about its axis.

The invention will now be described, by way of example, with reference to the accompanying drawings in which:-
Figure 1 is a longitudinal cross-section of part of an hydraulic master cylinder of the invention, with components thereof in a first operating condition, and
Figure 2 is a view similar to Figure 1, showing the components of the master cylinder in an alternative operative condition.

Referring to the drawings, these show part of a generally conventional master cylinder of which part of the cylinder body can be seen at 1, together with part of a secondary piston 2 slidable in the body and coupled to and movable simultaneously with a directly actuated primary piston (not shown), as will be understood by those versed in the art. The secondary piston 2 has a through passage 3 providing communication between the master cylinder reservoir (not shown) and a pressure chamber 4 of the cylinder 1, the end of the passage 3 adjacent the chamber 4 being provided with a valve seat 5 forming part of a valve mechanism, illustrated as a centre valve, of which the movable valve element is shown as a ball 6 secured by crimping to a carrier body 7. The body 7 is housed within a hollow cylindrical extension 8 of the piston which supports a surrounding spring reaction cup 9. A piston return spring 10 surrounds the cup 9 and bears at one end against a radial flange 11 of the cup, the other end of the spring abutting the closed end of the cylinder body. A further spring 12 acts between the base 10A of the cup and the body 7 to urge the valve member 6 towards the valve seat 5.

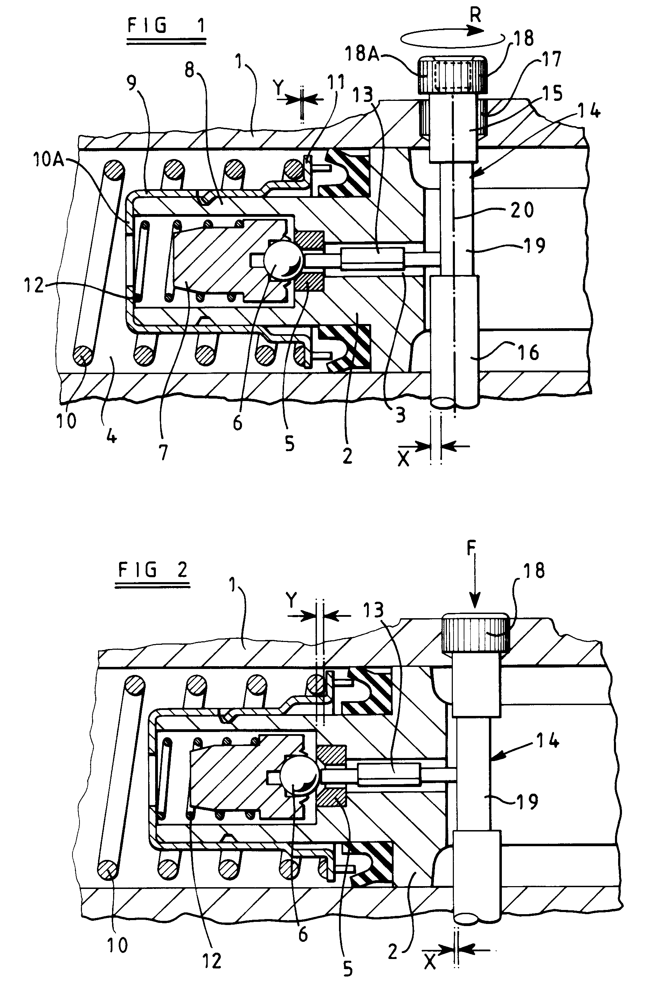

An abutment pin 13 extends through the passage 3 between the valve element 6 and a stop pin, indicated generally at 14, the latter extending, in this particular arrangement, diametrically transversely through the cylinder and being generally vertically disposed when the cylinder is in its illustrated normal horizontal position of use. The pin 14 is rotatably supported in the body by full diameter portions 15, 16 thereof housed within openings in the cylinder wall, one of which openings is enlarged at 17 to receive a head 18 of the pin, as can be seen in Figure 2. A smaller diameter portion 19 between the portions 16 and 17 of the pin is arranged eccentrically relative to the pin longitudinal axis 20 and it is this portion of the pin which engages the abutment pin 13.

For any individual master cylinder, the position of the piston 2 and therefore of the valve seat 5 thereon is dependent upon the cumulative axial tolerances of a number of components of the master cylinder and its associated booster. Since it is essential that the relative movement between the valve element 6 and seat 5 is always sufficient, in use, to enable the valve to assume its fully closed and fully open positions when required, it will be seen that it is necessary to adjust the position of the abutment pin 13 to set the fully open position of the valve element for the fully retracted position of the piston 2, once this latter has been established. It will be understood that the retracted position of the piston 2, taking into account the sum of various tolerances present, is usually set by adjuster means incorporated in the associated booster, in conventional manner, and the piston 2, in its fully retracted position, does not engage the stop pin 14.

Prior to assembly of the master cylinder internal components and the connection of the master cylinder to its associated booster, the stop pin 14 is disposed with its head 18 removed from the recess 17, the pin being thus free for rotation. After assembly of the master cylinder and booster combination has been completed and the final retracted position of the piston 2 has been set by effecting the necessary adjustment referred to previously, as for example at the booster, the stop pin 14 is rotated to vary the degree of eccentric offset X of the portion 19 until the clearance Y of the valve element 6 relative to the seat 5 has reached a desired value to permit free flow of fluid through the valve when the piston 2 is retracted, this being necessary to permit recuperation of the pressure cylinder 4 from the master cylinder reservoir, in conventional manner. Figure 1 illustrates an insufficient value for clearance Y, with the corresponding offset of the eccentric portion 19 correspondingly large. As the stop pin 14 is rotated in the direction of arrow R, the eccentric portion 19 will perform a camming action on the abutment pin 13, increasing the clearance Y at the valve seat until it reaches the desired value illustrated in Figure 2, the offset value X decreasing by a corresponding amount. This setting process is carried out with the master cylinder in a jig with fluid applied through the passage 3, so that the correct valve open clearance can be determined by measuring fluid flow therethrough, or in any other appropriate manner.

Once the position of the valve member 6 has been correctly set, the stop pin 14 is moved axially in the direction indicated by the arrow F, the head 18 being forced into the recess 17 so that splines 18A on the head deform the internal surface of the bore 17 to lock the stop pin against undesired rotation. Alternatively, the head 18 may be disposed freely within the recess 17 and a releasable anti-rotational locking means provided to enable the pin to be released when required for further rotational adjustment, as during servicing of the master cylinder for example. As a further alternative, it would also be possible to house the head in a small housing attached to the external cylinder wall and to lock the head relative to this housing to prevent unwanted rotation thereof.

Although the adjustable stop is illustrated and described herein as a rotatable eccentric, it would be possible to provide the same effect using a linearly movable wedge-like stop. A further possibility is to use a pin having a plurality of different diameter portions which may be brought alternatively into operation, although some fineness of adjustment may be sacrificed with such a device. It would be possible for the stop pin to extend only partially into the master cylinder bore instead of completely through the bore, as illustrated. The valve insert 5 in the piston may be of metal or of relatively resilient material, such as rubber or plastics, as required. Other types of valves may be employed in place of the centre valve described, and it will be understood that the valve seat may be provided by a forward face of the piston, in which case the illustrated ball 6 may be replaced by a valve element of resilient material.

It will be seen that the invention provides a simple and convenient means for setting the valve 6, being capable of rapid implementation on a production line, enabling the throughput of assembled master cylinders to be increased, as compared with some prior proposals.

## Claims

1. An hydraulic master cylinder comprising a cylinder body (1) containing a valve having a valve element (6) cooperating with a valve seat (5) carried by a piston (2) slidable in the body, the valve element and valve seat being relatively movable between two positions to permit opening and closing of the valve, and stop means (14) arranged to hold the valve element (6) in a fully open position relative to the valve seat (5) for a retracted position of the piston, characterised in that the stop means (14) is adjustable to set the fully open position of the valve element (6) dependent upon the tolerances present between components of the master cylinder.

2. A master cylinder according to Claim 1, characterised in that the stop means (14) extends transversely through the cylinder body.

3. A master cylinder according to Claim 1 or Claim 2, characterised in that the stop means (14) is operable to vary the position of the valve element (6) progressively relative to the seat (5).

4. A master cylinder according to Claim 3, characterised in that the stop means (14) is operable to perform a camming action to provide the progressive variation of the valve element position.

5. A master cylinder according to Claim 4, characterised in that the stop means (14) is rotatable about its longitudinal axis (20) and has an eccentric portion (19) arranged to perform the camming action upon rotation of the stop means about its axis.

6. A master cylinder according to Claim 4 or Claim 5, characterised in that the stop means is a pin (14) having axially spaced portions (15, 16) forming trunnions serving to mount the pin rotatably in the body (1), a portion (19) of the pin between the trunnions being eccentric to the rotary axis (20) and serving to perform the camming action upon rotation of the pin about its axis.

7. A master cylinder according to any one of the preceding claims, characterised in that the stop means (14) cooperates with the valve element (6) by way of a force-transmitting element (13) extending through the valve seat (5) to contact the valve element.

8. A master cylinder according to any one of the preceding claims, characterised in that the valve element (6) is spring-urged towards engagement with its seat (5).

9. A master cylinder according to any one of the preceding claims, characterised in that the valve element is a ball (6) mounted on a carrier member (7) which is spring-urged in a direction towards the valve seat (5).

10. A master cylinder according to any one of the preceding claims, characterised in that the valve element is housed within a hollow axial extension (8) of the piston (2).

11. A master cylinder according to any one of the preceding claims, characterised in that the stop means (14) is locked relative to the cylinder after adjustment.

12. A master cylinder according to any one of Claims 6 to 10, characterised in that the pin (14) has a serrated head (18) which, after adjustment of the valve, is forced into an opening (7) in the cylinder wall of slightly smaller cross-section than the head, whereby the head serrations bite into the wall of the opening to lock the pin in place.
